# FASCICULE DE BREVET EUROPEEN

(11) **EP 3 299 236 B1**
(45) Date de publication et mention de la délivrance du brevet: **14.10.2026**
(21) Numéro de dépôt: 17177500.0
(22) Date de dépôt: 22.06.2017
(51) Int. Cl.: B60W 20/11, F16H 61/02

(54) **PROCEDE DE COMMANDE D'UNE TRANSMISSION AUTOMATIQUE POUR VEHICULE AUTOMOBILE**
VERFAHREN ZUR STEUERUNG EINES AUTOMATIKGETRIEBES FÜR KRAFTFAHRZEUGE
METHOD FOR CONTROLLING AN AUTOMATIC TRANSMISSION FOR A MOTOR VEHICLE

(30) Priorité: 27.09.2016 FR 1659080
(43) Date de publication de la demande: 28.03.2018
(73) Titulaire: Renault s.a.s, 92100 Boulogne Billancourt (FR)
(72) Inventeur: LEFEVRE, Aurélien, 91300 Massy (FR)
(74) Mandataire: Renault Group

(56) Documents cités:
- EP-A1- 2 611 663
- EP-A2- 2 218 945
- DE-A1- 102006 009 589
- DE-A1- 102010 008 695

## Description

L'invention a pour domaine technique la commande de boîte de vitesses automatique de véhicule automobile à au moins deux états de chaîne cinématique associés à une loi de gestion d'énergie.

Un état de chaîne cinématique est défini par une combinaison d'état(s) de coupleur(s) et d'état(s) de réducteur(s) spécifiques à une architecture de véhicule donnée.

Sur une boîte de vitesses de véhicule automobile à moteur à combustion interne, également appelé moteur thermique, un état de chaîne cinématique peut correspondre à un état de réducteur de première engagé et un embrayage moteur thermique-boîte de vitesses fermé. Il peut aussi s'agir, sur un véhicule hybride, d'un embrayage moteur thermique-boîte de vitesses ouvert et de moteurs électriques propulsant le véhicule par les roues arrière.

Dans ce cadre logiciel, la fonction d'élaboration de la consigne d'état de chaîne cinématique consiste à définir dans un premier temps l'ensemble des états de chaîne cinématique viables dans des conditions de roulage définies à travers une succession d'arbitrages liés à des contraintes dites d'agrément.

Ces dernières peuvent être notamment des contraintes de type NVH (Noise, Vibration and Harnes), des contraintes de type fiabilité (Inhibition des états amenant à un sous/sur régime des organes de traction), des contraintes liées aux modes de conduites (Marche avant, Marche arrière, etc.) sélectionné par le conducteur, des contraintes liées au brio du véhicule.

Ainsi, un certain nombre d'états de chaîne cinématique viables avant tout arbitrage, correspondant aux états de chaîne cinématique théoriquement accessibles sur le véhicule, sont alors jugés viables et éligibles dans des conditions de roulage données et correspondent aux états de chaîne cinématique optimaux en termes d'agrément de conduite.

Ces états de chaîne cinématique éligibles en termes d'agrément, ont pour chacun des qualités de dépollution et de consommation propre.

Il existe un besoin pour un procédé de détermination de l'état de chaîne cinématique optimale à la fois en termes d'agrément, de dépollution et de consommation propre.

De l'état de la technique antérieure, on connaît les documents suivants.

Le document US 2011-0213519A1 divulgue une stratégie traitant principalement de la sélection des états optimaux en termes d'agrément réalisables sans sur/sous régimes des organes de traction en fonction d'une accélération requise à partir d'une position de pédale et d'une requête de couple à destination des organes de traction.

Elle traite aussi principalement de la détermination de la distribution optimale de la puissance sur les états optimaux en termes d'agrément sélectionnés. L'optimisation énergétique évoquée ne traite que de la partie consommation. La combinaison optimale des ratios finaux est appliquée sans stratégie de consolidation.

La stratégie présentée dans ce document ne traite ni de la manière de sélectionner les états de chaîne cinématique viables d'un point de vue agrément, ni de la stratégie de cotation des états de chaîne cinématique en fonction de critères de dépollution et de consommation mais de la sélection d'un état optimal en fonction de ces deux paramètres.

La stratégie présentée ici ne réalise pas une sélection simple en fonction de ces deux paramètres mais une sélection avec un mécanisme de consolidation dépendant de la sélection des états optimaux en termes d'agrément et d'un classement des états en fonction de critères de dépollution et de consommation.

Le document FR 3 004 231 A1 présente une solution permettant de définir si un état de chaîne cinématique peut être considéré comme un état de rapport montant ou descendant. Une telle approche est cohérente dans le cas d'une boîte de vitesses pour véhicule thermique à rapport discret. Toutefois, cette approche perd toute cohérence dès lors que l'on considère un GMP hybride pour lequel on en raisonne plus en terme de rapports mais de combinaison de rapports thermiques et électriques avec des potentiels de forces à la roues différents suivants les niveaux de couples maximaux des organes électriques et thermique et des réductions associées.

Le document FR 3 023 526 A1 présente une solution permettant de définir une liste d'états de chaîne cinématique viables d'un point de vue agrément avec un mécanisme de succession d'arbitrages permettant d'arriver à une liste finale d'états de chaîne cinématique à partir d'une liste initiale d'état de chaîne cinématique. La liste finale est considérée comme satisfaisant l'ensemble des contraintes d'agréments nécessaires à la bonne prestation du véhicule.

Le document DE 10 2010 008695 A1 divulgue un procédé de sélection d'un rapport de transmission optimal. Le document EP 2 218 945 A2 divulgue également un tel procédé.

Le problème technique à résoudre est de proposer une méthode pour définir l'état de chaîne cinématique cible optimal en termes de consommation, de dépollution et d'agrément.

L'invention a pour objet un procédé selon la revendication 1.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principales étapes d'un procédé de commande selon l'invention,
- la figure 2 illustre un exemple de réalisation du procédé de commande selon l'invention, et
- la figure 3 illustre un chronograme des différentes actions du procédé de commande selon l'invention.

Le procédé de commande d'une transmission automatique possédant au moins deux états de chaîne cinématique distincts a pour but de définir l'état de chaîne cinématique optimal en termes de consommation, de dépollution et d'agrément ainsi que de consolider sa demande d'application auprès de la boîte de vitesses.

Il peut être utilisé par l'ensemble des véhicules thermiques, hybrides et électriques équipés d'une transmission automatique possédant au moins deux états de chaîne cinématique distincts.

Son principe de fonctionnement se décline en deux étapes distinctes :
- une première étape 1 au cours de laquelle on définit l'état optimal en termes de consommation, dépollution et agrément, et
- une deuxième étape 2 au cours de laquelle on consolide l'état optimal en état cible pour la boîte de vitesses.

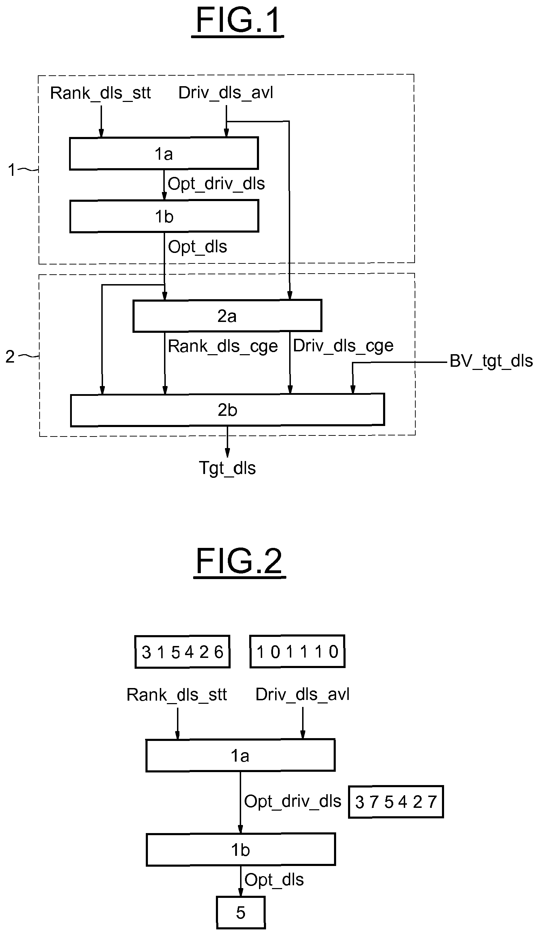

La figure 1 illustre ces étapes et les sous-étapes qu'elles comprennent.

Au cours de la première étape 1, on reçoit un classement Rank_dls_stt des états de chaîne cinématique en termes d'efficacité de dépollution et de consommation émis par une loi de gestion d'énergie (LGE) et une liste Driv_dls_avl des états de chaîne cinématique viables d'un point de vue agrément émis par le contrôle adaptatif de rapport ASC (Adaptative Shift Control).

Le classement Rank_dls_stt des états de chaîne cinématique en termes d'efficacité de dépollution et de consommation représente l'ordre de priorité à la sélection d'un état de chaîne cinématique. Lorsqu'il est réalisé sur un véhicule possédant X états de chaîne cinématique, Ce classement se présente sous la forme d'une chaîne de X coefficients, chaque coefficient représentant l'ordre de priorité de sélection de l'état correspondant, chaque coefficient variant entre des valeurs de 1 à X, chaque valeur étant attribuée de façon unique à un coefficient du classement.

Le contrôleur adaptatif de rapport ASC (Adaptative Shift Control) fournit à tout instant la liste Driv_dls_avl des états de chaîne cinématique viables d'un point de vue agrément. Cette liste représente la liste des états de chaîne cinématique satisfaisant l'ensemble des contraintes d'agréments et de ce fait représente les états éligibles à la sélection et à la réalisation par la boîte de vitesses du véhicule. Ce classement se présente sous la forme d'une chaîne de X coefficients, chaque coefficient représentant l'éligibilité ou non de l'état correspondant, chaque coefficient une valeur si l'état est éligible ou une autre valeur si l'état n'est pas éligible.

Le classement Rank_dls_stt et la liste des états éligibles Driv_dls_avl sont dans un premier temps mis en relation pour trouver l'état de chaîne cinématique optimal Opt_dls correspondant à l'état de chaîne cinématique éligible dans Driv_dls_avl ayant le coefficient le plus faible et donc prioritaire au sens du classement Rank_dls_stt.

Pour réaliser cela, au cours d'une première sous-étape 1a, on définit un nouveau classement Opt_driv_dls présentant la même structure que le classement Rank_dls_stt et dans lequel on recopie les X coefficients du classement Rank_dls_stt des états non éligibles dans Driv_dls_avl, avec une valeur X+1, les autres coefficients étant recopiés sans changement.

Au cours d'une deuxième sous-étape 1b, on détermine alors le coefficient le plus faible parmi le nouveau classement Opt_driv_dls. On détermine ensuite l'état de la chaîne cinématique associé, le coefficient le plus faible étant associé à un état décrit dans la liste des états éligibles Driv_dis_avl. Cet état de la chaîne cinématique associé, est alors nommé état de chaîne cinématique optimal Opt_dls.

L'état de chaîne cinématique optimal Opt_dls ainsi obtenu est l'état de chaîne cinématique optimal en termes de consommation, de dépollution et d'agrément.

La deuxième étape 2 consiste à consolider l'état de chaîne cinématique optimal Opt_dls en un état de chaîne cinématique cible optimal stable Tgt_dls à destination de la boîte de vitesses.

Au cours d'une première sous étape 2a, on détermine si l'état de chaîne cinématique optimal Opt_dls change. Lorsque tel est le cas, on détermine l'origine du changement.

Lorsque le changement de l'état de chaîne cinématique optimal Opt_dls est dû à un changement du classement des états Rank_dls_stt, on attribue une première valeur, par exemple vrai, à une valeur booléenne de changement du classement Rank_dls_cge, une deuxième valeur, par exemple faux à une valeur booléenne de changement d'agrément Driv_dls_cge.

Lorsque le changement de l'état de chaîne cinématique optimal Opt_dls est dû à un changement de la liste des états viables d'un point de vue agrément Driv_dls_avl, on attribue une première valeur, par exemple vrai, à une valeur booléenne de changement d'agrément Driv_dls_cge, et une deuxième valeur, par exemple faux, à une valeur booléenne de changement du classement Rank_dls_cge.

On appelle Opt_dls_old l'état de chaîne cinématique optimal précédent le changement de l'état de chaîne cinématique optimal Opt_dls. L'état Opt_dls_old à l'instant t est égal à l'état Opt_dls à l'instant de calcul précédent.

On appelle Driv_dls_avl_old la liste des états de chaîne cinématique viable d'un point de vue agrément avant le changement de l'état de chaîne cinématique optimal Opt_dls. La liste des états Driv_dls_avl_old à l'instant t est égale à la liste des états Driv_dls_avl à l'instant de calcul précédent.

Pour réaliser cela, on détermine si l'état de chaîne cinématique optimal précédent Opt_dls_old était éligible avant l'observation du changement dans la liste des états Driv_dls_avl_old et ne l'est plus au moment du changement dans la liste des états de chaîne cinématique viables d'un point de vue agrément Driv_dls_avl ou si l'état de chaîne cinématique optimal Opt_dls n'était pas éligible avant l'observation du changement dans la liste des états Driv_dls_avl_old et l'est au moment du changement dans la liste des états de chaîne cinématique viables d'un point de vue agrément Driv_dls_avl.

Dans de tels cas, on détermine que le changement est dû au changement de la liste des états viables d'un point de vue agrément Driv_dls_avl et non pas au changement du classement des états Rank_dls_stt. On attribue alors la deuxième valeur, par exemple faux, à la valeur booléenne de changement du classement Rank_dls_cge, et la première valeur, par exemple vrai, à la valeur booléenne de changement d'agrément Driv_dls_cge.

Dans les autres cas, on attribue alors la première valeur, par exemple vrai, à la valeur booléenne de changement du classement Rank_dls_cge, et la deuxième valeur, par exemple faux, à la valeur booléenne de changement d'agrément Driv_dls_cge.

Au cours d'une deuxième sous-étape 2b, on définit l'état cible stable et optimal en termes de consommation, de dépollution et d'agrément.

Dans le cas où l'état de chaîne cinématique optimal Opt_dls change et que cela est dû à un changement de la liste des états viables d'un point de vue agrément Driv_dls_avl (c'est-à-dire que la valeur booléenne de changement d'agrément Driv_dls_cge prend une première valeur, par exemple vrai), on détermine que l'état de chaîne cinématique optimal cible Tgt_dls est égal à l'état de chaîne cinématique optimal Opt_dls, les contraintes d'agrément étant prioritaires.

Dans le cas où l'état de chaîne cinématique optimal Opt_dls change et que cela est dû à un changement de classement Rank_dls_stt (c'est-à-dire que la valeur booléenne de changement du classement Rank_dls_cge prend une première valeur, par exemple vrai), on détermine que l'état de chaîne cinématique optimal cible Tgt_dls est égal à l'état de chaîne cinématique optimal Opt_dls, puis on déclenche un compte à rebours d'une durée nommée Opt_cge_tmr à compter du moment où l'état de chaîne cinématique cible de la boîte de vitesses BV_tgt_dls devient égal à l'état cible Tgt_dls.

Durant ce compte à rebours, on inhibe tout changement de l'état de chaîne cinématique optimal Opt_dls dû à un changement du classement des états Opt_dls_stt, associé à la valeur booléenne de changement du classement Rank_dls_cge. Cela permet de limiter les changements de l'état de chaîne cinématique cible uniquement pour des raisons de consommation ou de dépollution.

A la fin de ce compte à rebours, tout changement de l'état de chaîne cinématique optimal Opt_dls dû à un changement de classement Opt_dls_stt est appliqué, de sorte que l'état de chaîne cinématique cible Tgt_dls devient égal à l'état de chaîne cinématique optimal Opt_dls. Un tel changement est suivi d'un nouveau démarrage du compte à rebours dès lors que l'état de chaîne cinématique cible de la boîte de vitesses BV_tgt_dls devient égal à l'état cible Tgt_dls.

Durant ce compte à rebours, tout changement de l'état de chaîne cinématique optimal Opt_dls dû à un changement de la liste des états de chaîne cinématique viables d'un point de vue agrément Driv_dls_avl, associé à la valeur booléenne de changement d'agrément Driv_dls_cge, est appliqué, de sorte que l'état de chaîne cinématique cible Tgt_dls devient égal à l'état de chaîne cinématique optimal Opt_dls, les contraintes d'agrément étant prioritaire.

Un exemple illustrant l'application du procédé décrit ci-dessus va maintenant être présenté dans le cadre d'un véhicule comprenant six états de chaîne cinématique distincts.

Le procédé débute par la première étape 1.

Au cours de la première sous-étape 1a de la première étape 1, on reçoit en entrée le classement des états de chaîne cinématique Rank_dls_stt avec une valeur correspondant à [3 1 5 4 2 6] et la liste des états viables d'un point de vue agrément Driv_dls_avl avec une valeur correspondant à [1 0 1 1 1 0], la valeur 1 correspondant à un statut « éligible » de l'état concernée, la valeur 0 correspondant à un statut « inéligible » de l'état concernée.

Dans l'exemple de valeur Driv_dls_avl, les états 2 et 6 de la chaîne cinématique sont inéligibles, on détermine un nouveau classement des états viables d'un point de vue agrément Opt_driv_dls dans lequel on copie les coefficients du classement des états de chaîne cinématique Rank_dls_stt ayant un stat « éligible » dans la liste des états viables d'un point de vue agrément Driv_dls_avl, et on attribue aux coefficients du classement des états de chaîne cinématique Rank_dls_stt ayant un stat « inéligible » dans la liste des états viables d'un point de vue agrément Driv_dls_avl, la valeur X+1, la valeur X correspondant au nombre d'état de la chaîne d'état cinématique. Ici, la chaîne d'état cinématique comprend six états, les coefficients des états inéligibles sont modifiés pour être égaux à la valeur sept.

A l'issue de la première sous-fonction 1a, on émet ainsi le nouveau classement des états viables d'un point de vue agrément ainsi obtenus Opt_driv_dls égal à la valeur [3 7 5 4 2 7].

Au cours de la deuxième sous-étape 1b de la première étape 1, on analyse le nouveau classement des états viables d'un point de vue agrément Opt_driv_dls, afin de déterminer le coefficient le plus faible. Dans l'exemple donné ci-dessus, le coefficient le plus faible du nouveau classement Opt_driv_dls est la valeur 2 situé en cinquième position, ce qui correspond à l'état de chaîne cinématique 5.

A l'issue de la deuxième sous-étape 1b, on émet ainsi l'état de chaîne cinématique optimal Opt_dls qui est égal à l'état 5.

Le procédé se poursuit par la deuxième étape 2.

Au cours de la première sous-étape 2a de la deuxième étape 2, on reçoit en entrée la liste des états de chaîne cinématique viables d'un point de vue agrément Driv_dls_avl et l'état de chaîne cinématique optimal Opt_dls en termes de consommation, dépollution et agrément. On détermine alors l'état de chaîne cinématique optimal précédent Opt_dls_old et la liste Driv_dls_avl_old.

Si l'état de chaîne cinématique optimal Opt_dls n'est pas viable dans la liste Driv_dls_avl_old avant le changement de l'état de chaîne cinématique optimal Opt_dls et est viable dans la liste dans la liste Driv_dls_avl après le changement de l'état de chaîne cinématique optimal Opt_dls ou si l'état de chaîne cinématique optimal précédent Opt_dls_old est viable dans Driv_dls_avl_old avant le changement de l'état de chaîne cinématique optimal Opt_dls et non viable dans Driv_dls_avl après le changement de l'état de chaîne cinématique optimal Opt_dls, on détermine que le changement de l'état de chaîne cinématique optimal Opt_dls est alors dû au changement de Driv_dls_avl. La valeur booléenne de changement d'agrément Driv_dis_cge prend alors une première valeur, par exemple vrai et valeur booléenne de changement du classement Rank_dls_cge prend une deuxième valeur, par exemple faux.

Si l'état de chaîne cinématique optimal Opt_dls et l'état de chaîne cinématique optimal précédent Opt_dls_old sont viables dans la liste Driv_dls_avl_old avant le changement de l'état de chaîne cinématique optimal Opt_dls et viables dans la liste Driv_dls_avl après le changement de l'état de chaîne cinématique optimal Opt_dls, on détermine que le changement de l'état de chaîne cinématique optimal Opt_dls est alors dû au changement du classement Opt_dls_stt. La valeur booléenne de changement de classement Rank_dls_cge prend alors une première valeur, par exemple vrai et la valeur booléenne de changement d'agrément Driv_dls_cge prend une deuxième valeur, par exemple faux.

Au cours de la deuxième sous-étape 2b de la deuxième étape 2, on reçoit en entrée l'état de chaîne cinématique optimal Opt_dls, la valeur booléenne de changement de classement Rank_dls_cge et la valeur booléenne de changement d'agrément Driv_dls_cge et l'état cible de la boîte de vitesses BV_tgt_dls.

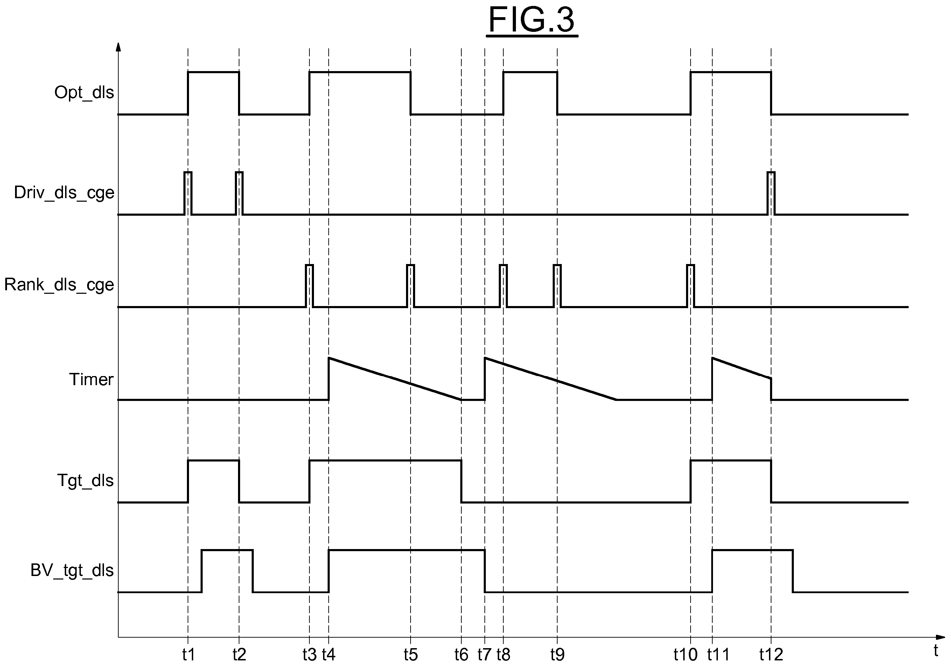

On se réfère maintenant à la figure 3, représentant un chronogramme du fonctionnement de la deuxième sous-étape 2b.

A un temps t1, on observe un changement de l'état de chaîne cinématique optimal Opt_dls accompagné d'un passage de la valeur booléenne de changement d'agrément Driv_dls_cge d'une deuxième à une première valeur. On détermine alors que le changement de l'état de chaîne cinématique optimal Opt_dls est et dû au changement de la liste des états viables d'un point de vue agrément. On commande alors l'état cible optimal Tgt_dls de sorte qu'il soit égal à l'état de chaîne cinématique optimal Opt_dls.

A un temps t2, on observe à nouveau un changement de l'état de chaîne cinématique optimal Opt_dls accompagné d'un passage de la valeur booléenne de changement d'agrément Driv_dls_cge d'une deuxième à une première valeur. On détermine alors que le changement de l'état de chaîne cinématique optimal Opt_dls est et dû au changement de la liste des états viables d'un point de vue agrément. On commande alors l'état cible optimal Tgt_dls de sorte qu'il soit égal à l'état de chaîne cinématique optimal Opt_dls.

A un temps t3, on observe à nouveau un changement de l'état de chaîne cinématique optimal Opt_dls accompagné d'un passage de la valeur booléenne de changement du classement Rank_dls_cge d'une deuxième à une première valeur. On détermine alors que le changement de l'état de chaîne cinématique optimal Opt_dls est et dû au changement du classement des états. On commande alors l'état cible optimal Tgt_dls de sorte qu'il soit égal à l'état de chaîne cinématique optimal Opt_dls.

A un temps t4, on observe que l'état cible de la boîte de vitesses BV_tgt_dls devient égal à l'état cible optimal Tgt_dls. Comme ce changement survient après un changement de l'état de chaîne cinématique optimal Opt_dls accompagné d'un passage de la valeur booléenne de changement du classement Rank_dls_cge d'une deuxième à une première valeur, on démarre un compte à rebours Timer.

A un temps t5, durant le compte à rebours Timer, on observe un changement de l'état de chaîne cinématique optimal Opt_dls accompagné d'un passage de la valeur booléenne de changement du classement Rank_dls_cge d'une deuxième à une première valeur. On détermine alors que le changement de l'état de chaîne cinématique optimal Opt_dls est dû au changement du classement des états. On maintient l'état cible optimal Tgt_dls dans sa valeur actuelle afin de ne pas à nouveau changer pour des raisons de consommation ou de dépollution. On mémorise l'état de chaîne cinématique optimal Opt_dls.

A un temps t6, le compte à rebours Timer se termine. On commande alors l'état cible optimal Tgt_dls de sorte qu'il soit égal à l'état de chaîne cinématique optimal Opt_dls mémorisé au temps t5.

A un temps t7, on détermine que l'état cible de la boîte de vitesses BV_tgt_dls devient égal à l'état cible optimal Tgt_dls. Comme ce changement survient après un changement de l'état de chaîne cinématique optimal Opt_dls accompagné d'un passage de la valeur booléenne de changement du classement Rank_dls_cge d'une deuxième à une première valeur, on démarre un compte à rebours Timer.

A un temps t8, durant le compte à rebours Timer, on observe un changement de l'état de chaîne cinématique optimal Opt_dls accompagné d'un passage de la valeur booléenne de changement du classement Rank_dls_cge d'une deuxième à une première valeur. On détermine alors que le changement de l'état de chaîne cinématique optimal Opt_dls est dû au changement du classement des états. On maintient l'état cible optimal Tgt_dls dans sa valeur actuelle afin de ne pas à nouveau changer pour des raisons de consommation ou de dépollution. On mémorise l'état de chaîne cinématique optimal Opt_dls

A un temps t9, durant le compte à rebours Timer, on observe un changement de l'état de chaîne cinématique optimal Opt_dls accompagné d'un passage de la valeur booléenne de changement du classement Rank_dls_cge d'une deuxième à une première valeur. On détermine alors que le changement de l'état Opt_dls est dû au changement du classement des états. On maintient l'état cible optimal Tgt_dls dans sa valeur actuelle afin de ne pas à nouveau changer pour des raisons de consommation ou de dépollution. On mémorise l'état de chaîne cinématique optimal Opt_dls à la place de l'état de chaîne cinématique optimal Opt_dls mémorisé au temps t8.

Il est à noter que l'état de chaîne cinématique optimal Opt_dls redevient alors égal à Tgt_dls. Le changement de l'état de chaîne cinématique optimal Opt_dls au temps t8 est alors sans impact sur l'état cible optimal Tgt_dls.

A un temps t10, on observe à un changement de l'état de chaîne cinématique optimal Opt_dls accompagné d'un passage de la valeur booléenne de changement du classement Rank_dls_cge d'une deuxième à une première valeur. On détermine alors que le changement de l'état de chaîne cinématique optimal Opt_dls est et dû au changement du classement des états. On commande alors l'état cible optimal Tgt_dls de sorte qu'il soit égal à l'état de chaîne cinématique optimal Opt_dls.

A un temps t11, on observe que l'état cible de la boîte de vitesses BV_tgt_dls devient égal à l'état cible optimal Tgt_dls. Comme ce changement survient après un changement de l'état de chaîne cinématique optimal Opt_dls accompagné d'un passage de la valeur booléenne de changement du classement Rank_dls_cge d'une deuxième à une première valeur, on démarre un compte à rebours Timer.

A un temps t12, durant le compte à rebours Timer, on observe un changement de l'état de chaîne cinématique optimal Opt_dls accompagné d'un passage de la valeur booléenne de changement d'agrément Driv_dls_cge d'une deuxième à une première valeur. On détermine alors que le changement de l'état de chaîne cinématique optimal Opt_dls est et dû au changement de la liste des états viables d'un point de vue agrément. On commande alors l'état cible optimal Tgt_dls de sorte qu'il soit égal à l'état de chaîne cinématique optimal Opt_dls, malgré le fait que le compte à rebours ne soit pas terminé. En effet, le changement est dû à de l'agrément ce qui le rend prioritaire.

## Revendications

1. Procédé de commande d'une transmission automatique pour véhicule automobile, la transmission automatique comprenant au moins deux états de chaîne cinématique distincts,
le véhicule comprenant une loi de gestion de l'énergie et un contrôle adaptatif de rapport,
comprenant les étapes suivantes :
on détermine un classement des états de chaîne cinématique en termes d'efficacité de dépollution et de consommation par l'intermédiaire de la loi de gestion d'énergie
on détermine une liste des états de chaîne cinématique viables d'un point de vue agrément par l'intermédiaire du contrôle adaptatif de rapport,
on détermine un état de chaîne cinématique optimal correspondant à l'état de chaîne cinématique éligible dans la liste des états de chaîne cinématique viables et étant prioritaire au sens du classement des états de chaîne cinématique,
on consolide l'état de chaîne cinématique optimal en un état de chaîne cinématique cible optimal stable à destination de la boîte de vitesses en fonction de l'état de chaîne cinématique cible de la boîte de vitesses,
on mémorise l'état de chaîne cinématique optimal précédent le changement de l'état de chaîne cinématique optimal,
on mémorise la liste des états de chaîne cinématique viable d'un point de vue agrément avant le changement de l'état de chaîne cinématique optimal,
**caractérisé en ce que** on détermine si l'état de chaîne cinématique optimal change, et que lorsque tel est le cas,
on détermine si l'état de chaîne cinématique optimal précédent était éligible dans la liste des états de chaîne cinématique viables précédent et ne l'est plus dans la liste des états de chaîne cinématique viables,
on détermine également si l'état de chaîne cinématique optimal n'était pas éligible dans la liste des états de chaîne cinématique viables précédent et l'est dans liste des états de chaîne cinématique viables,
si tel est le cas, on détermine que le changement est dû au changement de la liste des états de chaîne cinématique viables et non pas au changement du classement des états de chaîne cinématique, et on attribue une première valeur à la valeur booléenne de changement d'agrément et une deuxième valeur à la valeur booléenne de changement du classement,
si tel n'est pas le cas, on attribue une première valeur à la valeur booléenne de changement du classement, et une deuxième valeur à la valeur booléenne de changement d'agrément, et **en ce que** pour déterminer l'état de chaîne cinématique cible optimal stable, on réalise les étapes suivantes :
si la valeur booléenne de changement d'agrément prend une première valeur, on détermine que l'état de chaîne cinématique optimal cible est égal à l'état de chaîne cinématique optimal,
si la valeur booléenne de changement du classement prend une première valeur, on détermine que l'état de chaîne cinématique optimal cible est égal à l'état de chaîne cinématique optimal, puis on déclenche ensuite un compte à rebours d'une durée nommée à compter du moment où l'état de chaîne cinématique cible de la boîte de vitesses devient égal à l'état cible,
durant ce compte à rebours, on inhibe tout changement de l'état de chaîne cinématique optimal dû à un changement du classement des états, associé à la valeur booléenne de changement du classement,
à la fin de ce compte à rebours, tout changement de l'état de chaîne cinématique optimal dû à un changement de classement est appliqué, de sorte que l'état de chaîne cinématique cible devient égal à l'état de chaîne cinématique optimal, puis déclenche un nouveau compte à rebours dès lors que l'état de chaîne cinématique cible de la boîte de vitesses devient égal à l'état cible,
durant ce compte à rebours, tout changement de l'état de chaîne cinématique optimal dû à un changement de la liste des états de chaîne cinématique viables associé à la valeur booléenne de changement d'agrément est appliqué, de sorte que l'état de chaîne cinématique cible devient égal à l'état de chaîne cinématique optimal, les contraintes d'agrément étant prioritaires.

2. Procédé de commande selon la revendication 1, dans lequel, pour déterminer l'état de chaîne cinématique optimal,
on définit un nouveau classement présentant la même structure que le classement des états de chaîne cinématique,
parmi les coefficients du classement des états, on détermine les états non éligibles dans la liste, et pour ces coefficients, on attribue, dans le nouveau classement, une valeur égale au nombre de coefficients du classement des états incrémenté d'une unité,
et, pour les autres coefficients du nouveau classement, on recopie les coefficients du classement des états éligibles dans la liste des états de chaîne cinématique viables,
on détermine le coefficient le plus faible parmi les coefficient du nouveau classement,
on détermine l'état de la chaîne cinématique optimal comme étant l'état de chaîne cinématique décrit dans la liste des états de chaîne cinématique viables associé au coefficient le plus faible parmi les coefficient du nouveau classement.

## Patentansprüche

1. Verfahren zur Steuerung eines Automatikgetriebes für ein Kraftfahrzeug, wobei das Automatikgetriebe mindestens zwei unterschiedliche Antriebsstrangzustände beinhaltet,
wobei das Fahrzeug ein Gesetz zur Verwaltung der Energie und eine adaptive Schaltsteuerung beinhaltet,
beinhaltend die folgenden Schritte:
Bestimmen einer Rangordnung der Antriebsstrangzustände in Bezug auf eine Effizienz bei der Verringerung von Schadstoffen und beim Verbrauch mit Hilfe des Gesetzes zur Energieverwaltung,
Bestimmen einer Liste der umsetzbaren Antriebsstrangzustände hinsichtlich einer Zulässigkeit mit Hilfe der adaptiven Schaltsteuerung,
Bestimmen eines optimalen Antriebsstrangzustands, der dem Antriebsstrangzustand entspricht, der aus der Liste der umsetzbaren Antriebsstrangzustände auswählbar ist und im Sinne der Rangordnung der Antriebsstrangzustände vorrangig ist,
Zusammenfassen des optimalen Antriebsstrangzustands in einem stabilen optimalen Zielantriebsstrangzustand für das Getriebe in Abhängigkeit von dem Zielantriebsstrangzustand des Getriebes,
Speichern des optimalen Antriebsstrangzustands, der der Änderung des optimalen Antriebsstrangzustand vorausgeht,
Speichern der Liste der Antriebsstrangzustände, die hinsichtlich einer Zulässigkeit umsetzbar ist, vor der Änderung des optimalen Antriebsstrangzustands,
**dadurch gekennzeichnet, dass** bestimmt wird, ob sich der optimale Antriebsstrangzustand ändert, und wenn dies der Fall ist,
Bestimmen, ob der vorherige optimale Antriebsstrangzustand aus der Liste der vorherigen umsetzbaren Antriebsstrangzustände auswählbar war und
dies aus der Liste der umsetzbaren Antriebsstrangzustände nun nicht mehr ist,
ferner Bestimmen, ob der optimale Antriebsstrangzustand aus der Liste der vorherigen umsetzbaren Antriebsstrangzustände nicht auswählbar war und dies aus der Liste der umsetzbaren Antriebsstrangzustände nun ist,
wenn dies der Fall ist, Bestimmen, dass die Änderung in der Änderung der Liste der umsetzbaren Antriebsstrangzustände und nicht in der Änderung der Rangordnung der Antriebsstrangzustände begründet ist,
und Zuweisen eines ersten Werts zu dem booleschen Wert einer Zulässigkeitsänderung und eines zweiten Werts zu dem booleschen Wert einer Änderung der Rangordnung,
wenn dies nicht der Fall ist, Zuweisen eines ersten Werts zu dem booleschen Wert einer Änderung der Rangordnung und eines zweiten Werts zu dem booleschen Wert einer Zulässigkeitsänderung, und dass zum Bestimmen des stabilen optimalen Zielantriebsstrangzustands die folgenden Schritte durchgeführt werden:
wenn der boolesche Wert einer Zulässigkeitsänderung einen ersten Wert annimmt, Bestimmen, dass der optimale Zielantriebsstrangzustand gleich dem optimalen Antriebsstrangzustand ist,
wenn der boolesche Wert einer Änderung der Rangordnung einen ersten Wert annimmt, Bestimmen, dass der optimale Zielantriebsstrangzustand gleich dem optimalen Antriebsstrangzustand ist, und dann Auslösen eines Countdowns für eine genannte Dauer ab dem Moment, in dem der Zielantriebsstrangzustand des Getriebes gleich dem Zielzustand wird,
während dieses Countdowns, Verhindern jeglicher Änderung des optimalen Antriebsstrangzustands aufgrund einer Änderung der Rangordnung der Zustände, die mit dem booleschen Wert einer Änderung der Rangordnung assoziiert ist,
nach Abschluss dieses Countdowns, Anwenden jeglicher Änderung des optimalen Antriebsstrangzustands aufgrund einer Änderung einer Rangordnung, sodass der Zielantriebsstrangzustand gleich dem optimalen Antriebsstrangzustand wird, und dann Auslösen eines neuen Countdowns, sobald der Zielantriebsstrangzustand des Getriebes gleich dem Zielzustand wird,
während dieses Countdowns, Anwenden jeglicher Änderung des optimalen Antriebsstrangzustands aufgrund einer Änderung der Liste der umsetzbaren Antriebsstrangzustände, die mit dem booleschen Wert einer Zulässigkeitsänderung assoziiert ist, sodass der Zielantriebsstrangzustand gleich dem optimalen Antriebsstrangzustand wird, wobei die Zulässigkeitsbeschränkungen vorrangig sind.

2. Steuerungsverfahren nach Anspruch 1, wobei zum Bestimmen des optimalen Antriebsstrangzustands eine neue Rangordnung definiert wird, die die gleiche Struktur wie die Rangordnung der Antriebsstrangzustände aufweist,
innerhalb der Koeffizienten der Rangordnung der Zustände die aus der Liste nicht auswählbaren Zustände bestimmt werden und diesen Koeffizienten in der neuen Rangordnung ein Wert zugewiesen wird, der gleich der Anzahl von Koeffizienten der Rangordnung der Zustände, inkrementiert um eins, ist,
und für die anderen Koeffizienten der neuen Rangordnung die Koeffizienten der Rangordnung der aus der Liste der umsetzbaren Antriebsstrangzustände auswählbaren Zustände kopiert werden,
der niedrigste Koeffizient innerhalb der Koeffizienten der neuen Rangordnung bestimmt wird,
der optimale Antriebsstrangzustand als der in der Liste der umsetzbaren Antriebsstrangzustände beschriebene Antriebsstrangzustand bestimmt wird, der mit dem niedrigsten Koeffizienten innerhalb der Koeffizienten der neuen Rangordnung assoziiert ist.

## Claims

1. Method for controlling an automatic transmission for a motor vehicle, the automatic transmission comprising at least two distinct driveline states,
the vehicle comprising an energy management law and an adaptive ratio control,
comprising the following steps:
determining a classification of the driveline states in terms of pollution control and consumption efficiency via the energy management law,
determining a list of the viable driveline states from a point of view of drivability via the adaptive ratio control,
determining an optimal driveline state corresponding to the eligible driveline state in the list of the viable driveline states and taking priority in the sense of the classification of the driveline states,
consolidating the optimal driveline state into a stable optimal target driveline state destined for the gearbox as a function of the target driveline state of the gearbox,
storing the optimal driveline state preceding the change of the optimal driveline state,
storing the list of the viable driveline states from a point of view of drivability before the change of the optimal driveline state,
**characterized in that** it is determined if the optimal driveline state changes, and that when this is the case, it is determined if the preceding optimal driveline state was eligible in the list of the preceding viable driveline states and is no longer eligible in the list of the viable driveline states,
it is also determined if the optimal driveline state was not eligible in the list of the preceding viable driveline states and is eligible in the list of the viable driveline states,
if this is the case, it is determined that the change is due to the change of the list of the viable driveline states and not to the change of the classification of the driveline states, and a first value is attributed to the Boolean value of change of drivability, and a second value is attributed to the Boolean value of change of the classification,
if this is not the case, a first value is attributed to the Boolean value of change of the classification, and a second value is attributed to the Boolean value of change of drivability, and **in that**, to determine the stable optimal target driveline state, the following steps are carried out:
if the Boolean value of change of drivability assumes a first value, it is determined that the target optimal driveline state is equal to the optimal driveline state, if the Boolean value of change of the classification assumes a first value, it is determined that the target optimal driveline state is equal to the optimal driveline state, and then a countdown is triggered of a designated duration to be counted from the moment when the target driveline state of the gearbox becomes equal to this target state,
during this countdown, any change of the optimal driveline state due to a change of the classification of the states, associated with the Boolean value of change of the classification, is inhibited,
at the end of this countdown, any change of the optimal driveline state due to a change of classification is applied, such that the target driveline state becomes equal to the optimal driveline state, and then a new countdown is triggered as soon as the target driveline state of the gearbox becomes equal to the target state, during this countdown, any change of the optimal driveline state due to a change of the list of the viable driveline states associated with the Boolean value of change of drivability is applied, such that the target driveline state becomes equal to the optimal driveline state, the drivability constraints taking priority.

2. Control method according to Claim 1, wherein, to determine the optimal driveline state,
a new classification having the same structure as the classification of the driveline states is defined, among the coefficients of the classification of the states, the non-eligible states are determined in the list, and for these coefficients, in the new classification, a value is attributed equal to the number of coefficients of the classification of the states incremented by one unit,
and, for the other coefficients of the new classification, the coefficients of the classification of the eligible states are copied in the list of the viable driveline states,
the smallest coefficient among the coefficients of the new classification is determined,
the optimal driveline state is determined as being the driveline state described in the list of the viable driveline states associated with the smallest coefficient among the coefficients of the new classification.
